# EUROPEAN PATENT APPLICATION

(11) **EP 2 637 271 A1**
(43) Date of publication of application: **11.09.2013**
(21) Application number: 12158840.4
(22) Date of filing: 09.03.2012
(51) Int. Cl.: H02G 3/04

(54) **Cable mounting device and method of mounting cables**

(71) Applicant: Airbus Operations GmbH, 21129 Hamburg (DE)
(72) Inventor: Chassaigne, Didier, 22609 Harburg (DE); Kosiankowski, Lüder, 21698 Harsefeld (DE)
(74) Representative: Isarpatent

(57) **Abstract**

The present invention provides a device (1) for mounting cables, especially in an aircraft (20) or spacecraft, comprising: a first holder (2) for accommodating one or more power supply cables (6, 7), the first holder (2) defining a first path along which the one or more power supply cables (6, 7) extend; and at least one second holder (3) for receiving and retaining one or more signal or data cables (10), the at least one second holder (3) defining at least one second path along which the one or more signal or data cables (10) extend. The first path and the at least one second path are arranged adjacent and substantially parallel to one another, and the first holder (2) is configured to electromagnetically shield the one or more power supply cables (6, 7) along the first path.

## Description

The present invention relates to a device for mounting cables, particularly power cables and signal and/or data cables. In this regard, the cable mounting device of the invention is configured to support and guide cables or cable bundles in technical equipment or systems, such as aircraft and spacecraft, which typically require the routing of extensive amounts of cabling. Further, the present invention relates to a method of mounting cables, particularly with a cable mounting device of the invention, and especially in an aircraft or spacecraft.

In modern technical equipment and systems, and especially in relatively complex electro-mechanical equipment and systems, wires and cables for electrical power supply and for signal and/or data transfer are often required to be installed to provide electrical and/or data communication between different components of the equipment and systems. To assist in this task, cable conduits are known for enclosing and for routing of electrical wiring. Cable conduits are commonly made of plastic and provide good protection to enclosed conductors from impact, moisture and/or chemical vapors. Varying numbers, sizes, and types of conductors can be arranged in a conduit, which simplifies design and construction compared to multiple runs of cables or the expense of customized composite cables. Depending upon the complexity and intricacy of the equipment or system, wiring changes can be made more simply and more conveniently through the use of cable conduits, as existing conductors can be withdrawn and new conductors installed with little disruption along the path of the conduit. In many applications, however, the cable conduits are required to accommodate combinations of electrical (i.e. power) cables, communication cables, data cables, etc. which can lead to complications in installation, not to mention the potential for interference during use.

It is therefore an object of the present invention to provide an improved device for mounting cables, especially for use in aircraft or spacecraft.

In accordance with the present invention, a cable mounting device having the features of claim 1, a method of mounting cables as recited in claim 12, and an aircraft or spacecraft as recited in claim 15 is provided. Preferred features of the invention are recited in the dependent claims.

According to one aspect, therefore, the invention provides a device for mounting cables, especially in an aircraft or a spacecraft, comprising:
a first holder for accommodating one or more electrical power supply cables, the first holder defining a first path along which the one or more power supply cables extend in use; and
at least one second holder for receiving and retaining one or more signal and/or data cables, the at least one second holder defining at least one second path along which the one or more signal or data cables extend in use;
wherein the first path and the at least one second path are arranged adjacent and substantially parallel to one another, and wherein the first holder is configured to shield the one or more power supply cables electromagnetically along the first path.

In a preferred embodiment, therefore, the first holder of the cable mounting device may substantially surround or enclose a space or cavity for accommodating the one or more power supply cables along the first path, and this space or cavity is electromagnetically shielded along the first path. In this regard, a side or a wall of the first holder which surrounds or encloses this space or cavity is preferably electrically conductive. That is, the side or wall of the first holder may be formed of an electrically conductive material, e.g. a metal such as aluminium or an alloy thereof, or alternatively may include a layer or coating of such an electrically conductive material forming a shield. By employing just a layer or coating of the electrically conductive material, the shielding in the first holder can be held light-weight. Desirably, the electrically conductive material may be used as a ground conductor in the system or equipment, e.g. in an aircraft or spacecraft, which thereby also allows for weight reduction and can save costs in construction, as no additional ground conductor is needed for the electrical installation. This is particularly desirable in aircraft and spacecraft, in which the fuselage is constructed of nonconducting composite materials, such as carbon fibre-reinforced polymers.

In this way, the cable mounting device of the invention enables electrical power cables to be mounted together with signal and/or data cables without an electromagnetic field caused or generated by the one or more power cables leading to interference or cross-talk with the signal and/or data cables. That is, the cable mounting device of the invention can, in effect, electrically isolate the power supply cable(s) from the signal and/or data cable(s) and thereby reduce the prospect of the power supply cable(s) influencing the signal cables and/or data cables and potentially causing errors in the signal or data transmission. Thus, the present invention allows the use of data cables and/or signal cables that comprise a reduced shielding or no shielding, which enables a lightweight cabling design, which is especially of interest in an aircraft or spacecraft.

In a preferred embodiment, the first holder comprises a first channel for accommodating the one or more power supply cables. The first channel typically has a closed cross-section in a direction transverse to the first path defined by the first channel; e.g. the first channel may have a generally rectangular, elliptical or circular cross-section.

Furthermore, in a particularly preferred embodiment, the one or more power cables may be integrated in the cable mounting device of the invention. In this respect, it will be noted that the one or more power "cables" is to be understood as a reference to electrical power supply conductors, including wiring and strip conductors configured to supply electrical power to electrical equipment. More than one power supply cable or conductor may be provided to supply different types of electrical power, e.g. at different voltages. For example, power supply cables or conductors may be configured to supply electrical power in the range of 110-120 volt and/or in the range of 220-240 volt.

In this connection, the first holder or channel may include an electrical insulator configured to electrically insulate the one or more power supply cables. Desirably, the insulator is configured to mechanically support and secure the one or more power supply cables in the first holder. By configuring an electrical insulator to support and also to secure or fix the one or more power supply cables in the first holder or channel, the deployment of the cable mounting device of the invention can become straight-forward. With this embodiment, it is possible to employ and integrate power supply cables or conductors that do not have additional independent insulator coverings, thereby potentially reducing the weight and cost of the installation. Further, the insulator material may provide structural strength or support to the cable mounting device, allowing a reduction of the material thickness of the sides or walls of the device while it nevertheless achieves the same mechanical strength.

In a preferred embodiment, the cable mounting device comprises a plurality of second holders, and the plurality of second holders preferably define a plurality of second paths along which the signal and/or data cables extend in use. Thus, this embodiment allows for mounting an increased number of signal cables and/or data cables and, correspondingly, for a maximisation the cable-carrying capacity of the cable mounting device. The plurality of second cable paths provides separation and grouping for individual signal or data cables and/or for cable bundles in the cable mounting device. In this regard, it will be appreciated that a bundle of signal and/or data cables may be mounted in each second holder. In this way, the plurality of second holders can substantially enhance organisation, identification and access for the signal and/or data cabling and can prevent undesirable rubbing and chafing of the cables. The plurality of second paths along which the signal or data cables extend in use are desirably arranged side-by-side in a row, such that the plurality of second paths are substantially parallel to one another. The plurality of second holders are desirably arranged on a periphery of, and preferably across at least one side of, / the first holder or first channel. In one particular example, the plurality of second holders may be arranged around a periphery of, or at least on opposite sides of, the first holder or channel.

In a particularly preferred embodiment, each of the plurality of second holders of the cable mounting device is configured to at least partially electromagnetically shield the respective signal and/or data cable(s) received therein along the respective second path. In this way, the cable mounting device of the invention is also able to at least partially isolate the signal and/or data cables, or cable bundles, from one another to thereby minimize interference or cross-talk between the signal and/or data cables or cable bundles. In this regard, a side or a wall of each second holder which receives one or more signal or data cables may include an electrically conductive material forming an electromagnetic shield. That is, the side or wall of each second holder may be formed of an electrically conductive material, e.g. a metal such as aluminium or an alloy thereof, or may alternatively include a layer or coating of such an electrically conductive material.

In a preferred embodiment, each second holder preferably comprises a second channel for accommodating the one or more signal or data cables. In this regard, each second channel may have an open cross-section in a direction transverse to the second path defined by that second channel; e.g. each second channel may have a generally U-shaped cross-section. This open channel configuration of each second channel allows for easy installation of the signal and/or data cables into the device and also allows for easy access after installation. In addition, the open configuration of the second channel(s) provides lateral support for signal or data cables to be accommodated therein, and also at least partial shielding.

According to another aspect, therefore, the invention provides a cable mounting device, especially for an aircraft or spacecraft, comprising:
a first channel which accommodates one or more power supply cables; and
at least one second channel for accommodating one or more signal or data cables;
wherein the first channel and the at least one second channel are arranged adjacent one another and extend substantially parallel to one another, and
wherein the first channel is configured to electromagnetically shield the one or more power supply cables accommodated therein along the first channel.

As will be appreciated by persons skilled in the art, the various features recited above in relation to the first and second holders of the cable mounting device of the invention apply equally to the first and second channels of the device. The first path of the first holder corresponds to the path along a longitudinal extent of the first channel. Similarly, the second path of each second holder corresponds to the path along a longitudinal extent of that second channel. Further, a side or a wall of the first channel which surrounds or encloses a space or cavity for accommodating the one or more power supply cables along the first path preferably includes electrically conductive material to form the electromagnetic shield. That is, the sides or walls of the first channel may be formed of an electrically conductive material, e.g. of a metal such as aluminium or an alloy thereof, or alternatively may include a layer or coating of such a material. The cable mounting device preferably has a plurality of second channels to accommodate the signal and/or data cables, with each defining a second path for those signal and data cables.

In a preferred embodiment, the first holder or channel and/or the at least one second holder or channel comprises at least one fastener for securely fixing the respective one or more cables therein. That is, / the fastener may be configured to prevent unwanted movement of the cable(s) within the respective holder or channel and/or from inadvertently falling out of the respective holder or channel, e.g. during a change in the position or orientation of the aircraft or spacecraft. The at least one fastener preferably comprises one or more of a clip, a strap, a cover, a cap or other retainer member. The fastener(s) preferably provides for fast and easy fixing of the one or more cables in the respective channel.

In a preferred embodiment, the cable mounting device takes the form of an elongate structural member, such as a beam or structural support member. In this way, the cable mounting device may be incorporated in the frame structure of an aircraft or spacecraft as a load bearing member. The cable mounting device is preferably formed as an integral or unitary member and may, for example, be a moulded or extruded construction. As an example, the cable mounting device may comprise an extruded profile, e.g. formed from an aluminium alloy, which defines the first channel and the at least one second channel. The cable mounting device is preferably therefore configured to perform the dual roles of accommodating and guiding the cables and also forming part of a load bearing structure, e.g. in a fuselage or wing structure of an aircraft or spacecraft. The elongate member which comprises or forms the cable mounting device preferably has a low profile configuration, such that a height dimension of the cross-section or profile of the device is relatively small compared to a width dimension. In this regard, the height-to-width ratio is preferably in the range of 1:2 to 1:8, and more preferably in the range of 1:3 to 1:5.

In a preferred embodiment, the cable mounting device includes connecting elements at opposite longitudinal end regions and/or at lateral sides thereof for mechanically mounting the device to a frame structure and/or for mechanically connecting said device to another one of the cable mounting devices. Furthermore, in a particularly preferred embodiment, the cable mounting device includes electrical connectors at the opposite longitudinal end regions for electrically connecting the one or more power supply conductors or cables. In this way, multiple cable mounting devices according to the invention may be mechanically and/or electrically interconnected with one another to form a cable mount or conduit of a desired length.

In a preferred embodiment, / the cable mounting device may include more than one first holder or first channel for accommodating the one or more power supply cables. That is, the cable mounting device may include two, or three, or even more first holders or first channels, each of which is configured to accommodate at least one power supply cable or conductor and each of which is configured to electromagnetically shield the power supply cable(s) or conductor(s) along the first path.

According to a further aspect, the invention provides a method for mounting cables, especially in an aircraft or spacecraft, comprising the steps of:
providing a cable mounting device according to the invention as described above with respect to any one of the preceding embodiments; and
arranging one or more power supply cables in the first holder such that the one or more power supply cables extend along the first path defined by the first holder; and/or
arranging one or more signal and/or data cables in each second holder such that the one or more signal and/or data cables extend along the second path defined by each second holder.

In a preferred embodiment of the above method, the one or more power supply cables may be arranged and integrated in the first holder or channel during a manufacturing step of the cable mounting device. In particular, the method may comprise the step of: providing an electrical insulator material in the first holder or channel to electrically insulate the one or more power supply cables. The insulator material preferably surrounds or encompasses the one or more power supply cables in a space or cavity of the first holder or channel, thereby mechanically securing the one or more power supply cables in the first holder. Thus, the step of arranging and/or integrating the one or more power supply cables in the first holder or channel preferably includes mechanically supporting and/or securing the power cable(s) in an electrical insulator material.

In a preferred embodiment, the method further comprises the step of: securing the cable mounting device to a frame structure of an aircraft or spacecraft. Preferably, this method step involves deploying the cable mounting device as a structural or load bearing member in the frame structure of the aircraft or spacecraft. Furthermore, the method may comprise the steps of: providing a plurality of cable mounting devices according to the invention as described above with respect to any of the preceding embodiments, and mechanically and/or electrically interconnecting each of the cable mounting devices at longitudinal end regions thereof.

In a preferred embodiment, the method further comprises the step of: securely fixing the one or more cables in each respective holder or channel with one or more fastener, such as a clip, a strap, a cover, a cap or other retainer member.

According to yet another aspect, / the invention provides an aircraft or spacecraft, having at least one cable mounting device according to the invention as described above with respect to any one of the preceding embodiments.

For a more complete understanding of the invention and the advantages thereof, exemplary embodiments of the invention are explained in more detail in the following description with reference to the accompanying drawing figures, in which like reference characters designate like parts and in which:
- Fig. 1: is a schematic cross-sectional view of a cable mounting device according to a first embodiment of the present invention;
- Fig. 2: is a schematic cross-sectional view of the cable mounting device of Fig. 1 with integrated power supply cables or conductors;
- Fig. 3: is a schematic cross-sectional view of a cable mounting device according to a second embodiment of the invention;
- Fig. 4: is a perspective view of a cable mounting device according to an embodiment of the invention similar to the embodiment of Fig. 2, but having more second channels;
- Fig. 5: is a perspective view of a cable mounting device according to an embodiment of the invention similar to the embodiment of Fig. 3, but having more second channels and shown in use with the signal and/or data cables installed;
- Fig. 6: is a flow diagram schematically representing a method according to an embodiment of the present invention; and
- Fig. 7: shows an aircraft according to an embodiment of the present invention.

The accompanying drawings are included to provide a further understanding of the present invention and are incorporated in and constitute a part of this specification. The drawings illustrate particular embodiments of the invention and together with the description serve to explain the principles of the invention. Other embodiments of the invention and many of the attendant advantages of the invention will be readily appreciated as they become better understood with reference to the following detailed description.

It will be appreciated that common and well understood elements that may be useful or necessary in a commercially feasible embodiment are not necessarily depicted in order to facilitate a less abstracted view of the embodiments. The elements of the drawings are not necessarily illustrated to scale relative to each other. It will further be appreciated that certain actions and/or steps in an embodiment of a method may be described or depicted in a particular order of occurrences while those skilled in the art will understand that such specificity with respect to sequence is not actually required. It will also be understood that the terms and expressions used in the present specification have the ordinary meaning as it accorded to such terms and expressions with respect to their corresponding respective areas of inquiry and study, except where specific meanings have otherwise been set forth herein.

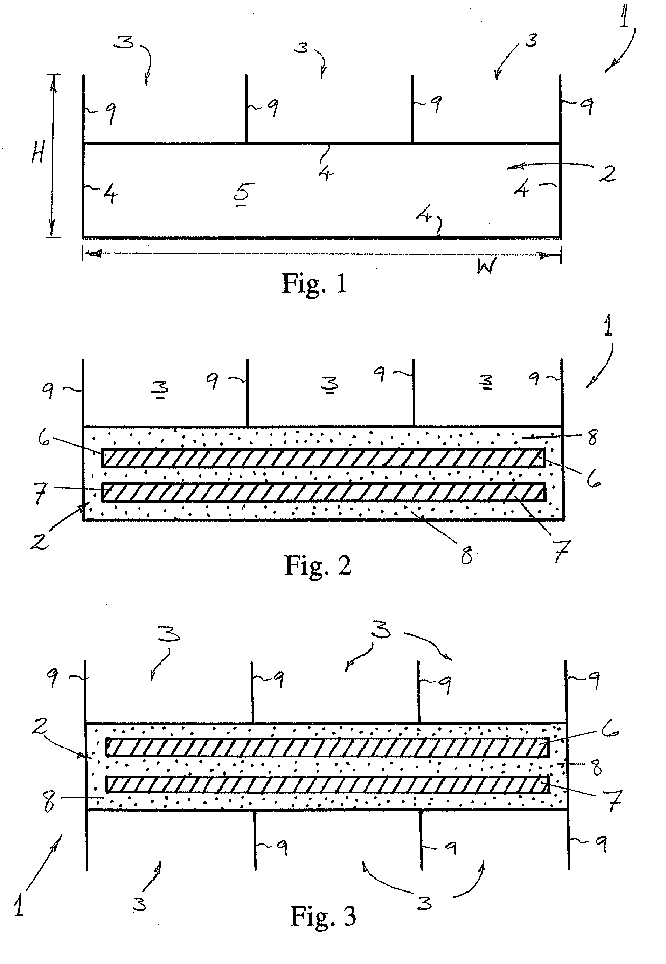

With reference firstly to Fig. 1 of the drawings, a cable mounting device 1 according to a first embodiment of the invention is in the form of an elongate member having a profile or transverse cross-section as shown. Cable mounting devices in general are often employed in complex electro-mechanical equipment and systems which require extensive wiring and cabling for electrical power supply and for signal and/or data transfer between different components of the equipment and system. Such cable mounting devices are variously referred to in the field as cable mounts, cable raceways, cable guides, and cable conduits.

The cable mounting device 1 shown in Fig. 1 comprises a first channel 2 having a closed rectangular section and a series of second channels 3 arranged side-by-side in a row across an upper side of the first channel 2. Each of the second channels 3 has an upwardly open, U-shaped cross-section. Each of the first and second channels 2, 3 in this view extends into the page (i.e. perpendicular to the plane of drawing Fig. 1) and thereby defines a respective path along the channel for the individual cables or the cable bundles to be arranged and supported in the cable mounting device 1.

The first channel 2, and thus also the cable mount device 1 as a whole, is relatively broad in the width direction W compared to the height direction H, which produces a relatively squat or low-profile configuration. The first channel 2 comprises sides or walls 4 which surround or enclose a rectangular, longitudinally extending space or cavity 5 configured to accommodate one or more power supply conductor or cable, which extends along the first channel 2. The sides or walls 4 of the first channel 2 incorporate an electrically conductive material, such as aluminium or an alloy thereof, to form an electromagnetic shield along the length of the channel 2. In this regard, the sides or walls 4 of the first channel 4 may be comprised of the electrically conductive material or may alternatively include a layer or coating thereof, such that the power supply cables or conductors accommodated within the first channel 2 are electromagnetically shielded.

Referring to Fig. 2 of the drawings, an embodiment of the cable mount 1 shown in Fig. 1 incorporating two separate power supply conductors 6, 7 integrated in the first channel 2 is illustrated. In particular, the first channel 2 of the cable mounting device 1 incorporates one power supply strip conductor 6 configured to carry 115 V electrical power and one power supply strip conductor 7 configured to carry 230 V electrical power. Each of the two strip conductors 6, 7 is embedded in an insulating material 8 such that the individual conductors 6, 7 are electrically isolated from one another, as well as from the walls 4 of the channel 2. The insulating material 8 - which may, for example, be an appropriately selected foamed polymer material - is configured to mechanically support and secure each of the power supply cables or conductors 6, 7 in position within the first channel 2.

Each of the second channels 3, which extend along a top side of the first channel 2, is configured to receive and hold one or more signal or data cables or cable bundles. Because the power supply cables or conductors 6, 7 integrated in the first channel 2 are electromagnetically shielded by the metal layer or material of the sides or walls 4 of the first channel 2, the signal and/or data cables or cable bundles which are to be accommodated in and extend long each of the second channels 3 do not experience any interference or cross-talk from the electromagnetic fields generated by the two strip conductors 6, 7.

Fig. 3 of the drawings illustrates a modification of the embodiment in Fig. 2, incorporating additional second channels 3 arranged side-by-side in a row across a lower side of the first channel 2. Each of the second channels 3 preferably includes a fastener or retainer member (not shown) for ensuring that the one or more signal or data cables accommodated therein remain securely fixed in the appropriate channel. In this regard, the fastener or retainer member may take the form of a clip, strap, cap, or cover element to at least partially close the longitudinal opening into each respective one of the second channels 3.

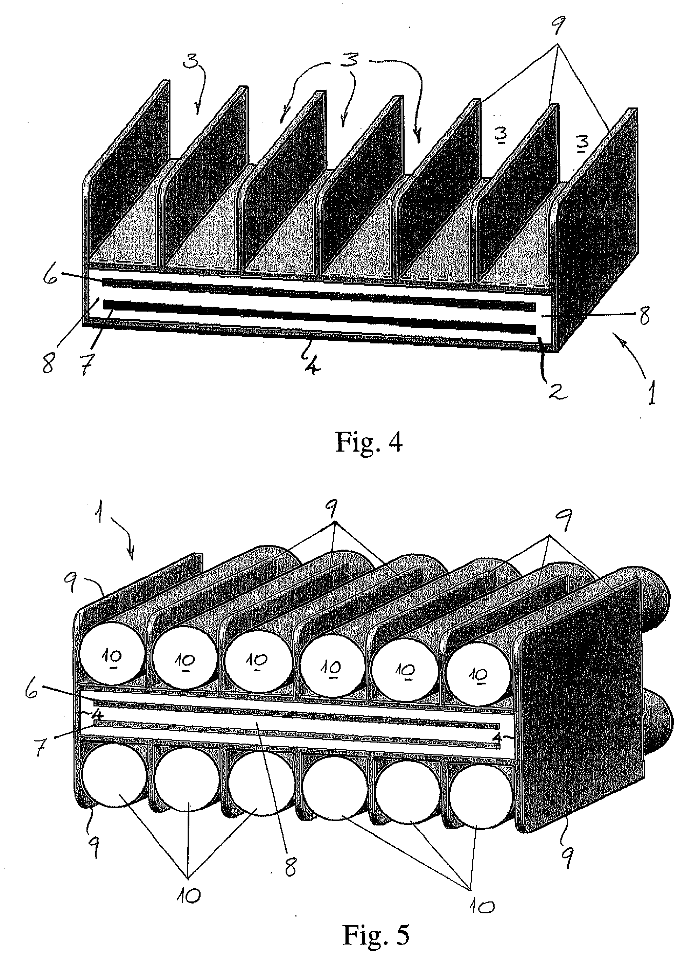

With reference now to Fig. 4 of the drawings, the cable mount 1 is shown in a truncated perspective view. That is, only a short longitudinal section (i.e. not the full length) of the cable mounting device 1 is shown for illustrative purposes, as the cross-section remains constant over the remainder of its length. The second channels 3 are arranged side-by-side in a row across the upper side of the first channel 2, which incorporates the power supply conductors 6, 7 embedded within the insulating material 8. As can be seen, vertical or upstanding side walls 9 of each of the second channels 3 are formed like fin members and may likewise either be formed of a metal material, such as aluminium or an alloy thereof, or incorporate a corresponding layer or coating thereof to at least partially shield each of the second channels 3 electromagnetically from the neighbouring or immediately adjacent second channels 3. In this way, signal and/or data cables or cable bundles accommodated in each of the second channels 3 are not able generate interference with the cables or cable bundles in the neighbouring channels.

Referring to Fig. 5 of the drawings, another embodiment of a cable mounting device 1 according to the invention is illustrated in a truncated perspective view, and showing the device 1 in use with signal and/or data cables (or cable bundles) 10 arranged within each of the second channels 3. The cable mounting device 1 in Figs. 1 to 5 of the drawings is desirably constructed as a robust structural element capable of assuming a load-bearing role in a frame structure, especially in an aircraft or spacecraft. Accordingly, the cable mount 1 described in the above embodiments may be formed integrally or as a unitary member as an elongate extrusion, e.g. from a metal, such as an aluminium alloy, which is both light-weight and mechanically strong and robust for a load-bearing role within a fuselage cell structure, a wing structure, or a tail structure of an aircraft or spacecraft.

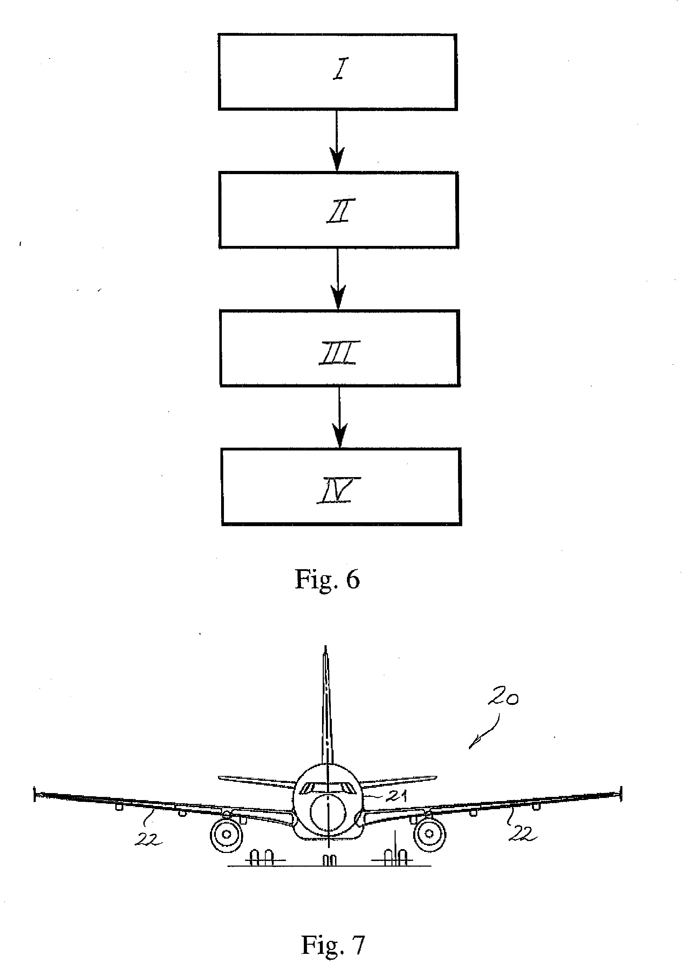

With reference now to Fig. 6 of the drawings, the method of mounting cables, especially in an aircraft or spacecraft, according to the invention is illustrated schematically, with the numbered boxes I to IV of the diagram representing steps of the method. The first box I represents the step: providing a cable mounting device 1 according to an embodiment of the invention as generally described above. The second box II represents the step of arranging one or more power supply cables or conductors 6, 7 in the first channel 2 such that the one or more power supply cables extend along the first path defined by the first channel. As such, this step may include providing an electrical insulator material in the first channel 2 to electrically insulate and to mechanically secure the power supply conductors 6, 7. Because the power supply conductors 6, 7 may be integrated into the first channel 2 during manufacture of the cable mounting device 1, it will be appreciated that the step of providing electrical insulator material in the first channel 2 may alternatively form part of the step represented by the first box I. The third box III represents the step of securing the cable mount 1 to a frame structure of an aircraft or spacecraft, and the fourth box IV represents the step of arranging one or more signal and/or data cables 10 in each second channel 3 such that the signal and/or data cables 10 extend along the second path defined by each second channel 3, as well as the step of fastening the signal and/or data cables 10 therein.

Finally, an aircraft 20 which incorporates one or more of the cable mounting devices 1 of the invention described in detail above with reference to Figs. 1 to 5 in a frame structure of its fuselage 21, wings 22, tail and/or horizontal stabilizers is shown schematically in Fig. 7.

Although specific embodiments of the invention have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

In this document, the terms "comprise", "comprising", "include", "including", "contain", "containing", "have", "having", and any variations thereof, are intended to be understood in an inclusive (i.e. non-exclusive) sense, such that the process, method, device, apparatus or system described herein is not limited to those features or parts or elements or steps recited but may include other elements, features, parts or steps not expressly listed or inherent to such process, method, article, or apparatus. Furthermore, the terms "a" and "an" used herein are intended to be understood as meaning one or more unless explicitly stated otherwise. Moreover, the terms "first", "second", "third", etc. are used merely as labels, and are not intended to impose numerical requirements on or to establish a certain ranking of importance of their objects.

### List of Reference Signs

- 1: cable mount or cable mounting device
- 2: first channel
- 3: second channel
- 4: side or wall of the first channel
- 5: space or cavity
- 6: upper strip conductor for power supply
- 7: lower strip conductor for power supply
- 8: insulating material
- 9: side wall of the second channel
- 10: signal or data cable/cable bundle
- 20: aircraft
- 21: fuselage
- 22: wing
- W: width direction
- H: height direction

## Claims

1. Device for mounting cables, especially in an aircraft or spacecraft, comprising:
a first holder for accommodating one or more power supply cables, the first holder defining a first path along which the one or more power supply cables extend; and
at least one second holder for receiving and retaining one or more signal or data cables, the at least one second holder defining at least one second path along which the one or more signal or data cables extend;
wherein the first path and the at least one second path are arranged adjacent and substantially parallel to one another, and wherein the first holder is configured to electromagnetically shield the one or more power supply cables along the first path.

2. Cable mounting device according to claim 1, wherein the first holder substantially surrounds or encloses a space or cavity for receiving and retaining the one or more power supply cables along the first path, and wherein the space or cavity is electromagnetically shielded along the first path.

3. Cable mounting device according to claim 2, wherein a side or wall of the first holder which surrounds or encloses the space or cavity is electrically conductive, wherein the side or wall is preferably either formed of an electrically conductive material, e.g. metal, or includes a layer of an electrically conductive material.

4. Cable mounting device any one of the preceding claims, wherein the one or more power cables is/are integrated in the first holder surrounded or encompassed by an electrical insulator configured to mechanically support and secure the one or more power supply cables therein.

5. Cable mounting device according to any one of the preceding claims, wherein the first holder comprises a first channel for accommodating the one or more power supply cables, and wherein the first channel has a closed cross-section in a direction transverse to the first path defined by the first channel.

6. Cable mounting device according to any one of the preceding claims, wherein the at least one second holder comprises a plurality of second holders, the plurality of second holders defining a plurality of second paths along which the signal or data cables extend in use.

7. Cable mounting device according to claim 6, wherein the plurality of second paths along which the signal or data cables extend in use are arranged side-by-side in a row such that the plurality of second paths are substantially parallel to one another.

8. Cable mounting device according to claim 6 or claim 7, wherein the plurality of second holders are at least partially electromagnetically shielded from one another; wherein the plurality of second holders are arranged on a periphery of and/or on at least one side of the first holder.

9. Cable mounting device according to any one of the preceding claims, wherein the at least one second holder comprises at least one second channel for accommodating the one or more signal or data cables, wherein each second channel has an open cross-section in a direction transverse to the second path defined by that second channel.

10. Cable mounting device according to any one of the preceding claims, wherein the first holder and/or the at least one second holder comprises at least one fastener for securely fixing the respective one or more cables therein, wherein the at least one fastener comprises a clip, a strap, a cover, or a cap.

11. Cable mounting device according to any one of the preceding claims, wherein the device is elongate and of an integral or unitary construction and forms a structural member for integration in a frame structure of an aircraft or spacecraft, wherein the device preferably includes electrical connectors at opposite longitudinal end regions thereof to electrically couple the one or more power supply cables.

12. Method for mounting cables, especially in an aircraft or spacecraft, comprising the steps of:
providing a cable mounting device according to any one of the preceding claims; and
arranging one or more power supply cables in the first holder such that the one or more power supply cables extend along the first path defined by the first holder; and/or
arranging one or more signal and/or data cables in each second holder such that the one or more signal and/or data cables extend along the second path defined by each second holder.

13. Method according to claim 12, comprising the step of:
embedding one or more power supply cables in an electrical insulator material in the first holder or first channel, wherein the insulator material surrounds or encompasses the one or more power supply cables in a space or cavity of the first holder or first channel and mechanically secures the one or more power supply cables in the first holder.

14. Method according to claim 12 or claim 13, further comprising one or more of the steps of:
securing the cable mounting device to a frame structure of an aircraft or spacecraft; and
providing an electrical insulator material in the first holder to electrically insulate the one or more power supply cables, wherein the insulator material preferably surrounds or encompasses the one or more power supply cables in a space or cavity of the first holder, thereby mechanically securing the one or more power supply cables in the first holder.

15. Aircraft or spacecraft, comprising at least one cable mounting device according to any one of claims 1 to 11.
